# DEMANDE DE BREVET EUROPEEN

(11) **EP 1 969 978 A1**
(43) Date de publication de la demande: **17.09.2008**
(21) Numéro de dépôt: 08152314.4
(22) Date de dépôt: 05.03.2008
(51) Int. Cl.: A47J 27/62

(54) **Appareil électroménager de préparation culinaire brassant et chauffant à chauffage régule**

(30) Priorité: 13.03.2007 FR 0753805
(71) Demandeur: SEB SA, 69130 Ecully (FR)
(72) Inventeur: Charles, Patrick, 65290 Louey (FR); Noguez, Jean-Michel, 65100 Lourdes (FR); Astegno, Jean-Paul, 64420 Espoey (FR); Lacourpaille, Gérard, 65380 Ossun (FR)
(74) Mandataire: Blanchard, Eugène Gilles

(57) **Abrégé**

. L'invention concerne un appareil électroménager de préparation culinaire comprenant une cuve de cuisson (**5**), un élément chauffant électrique (**10**), des moyens (**6,7,8**) de brassage actionnés par un moteur électrique (**8**), des moyens (**15**) de commande et d'alimentation de l'élément chauffant électrique (**10**) et du moteur électrique (**8**), les moyens de commande (**15**) étant adaptés pour assurer le fonctionnement de l'appareil électrique (**8**) selon un cycle de cuisson comprenant au moins une première phase de cuisson pendant laquelle le moteur électrique (**8**) fonctionne, l'élément chauffant (**10**) délivre une puissance moyenne au moins égale à 200 W par litre de contenance de la cuve de cuisson et la température est mesurée pour déterminer, en fonction d'une température de consigne cuisson, la fin de la première phase de cuisson, une deuxième phase de cuisson dont la durée est déterminée en fonction de la durée choisie et pendant laquelle le moteur électrique (**8**) fonctionne et la puissance moyenne délivrée par l'élément chauffant (**10**) est inférieure à 200W par litre de contenance de la cuve de cuisson et de préférence inférieure à 160W par litre de contenance de la cuve de cuisson.

## Description

La présente invention concerne le domaine technique des appareils électroménagers de préparation culinaire conçus pour permettre une cuisson accompagnée d'un brassage d'aliments divers.

Dans le domaine ci-dessus, il est connu de mettre en oeuvre des appareils électroménagers de préparation culinaire comprenant une cuve de cuisson et des moyens de chauffage de la cuve de cuisson comprenant au moins un élément chauffant électrique piloté par des moyens de commande. De tels appareils électroménagers de préparation culinaire comprennent en outre des moyens de brassage du contenu de la cuve de cuisson qui sont constitués d'au moins un outil de brassage entraîné en rotation par un moteur électrique également piloté par les moyens de commande. Il est généralement prévu, afin d'assurer une régulation de la température, des moyens de mesure de la température qui sont raccordés aux moyens de commande.

Un exemple particulier de tels appareils est notamment décrit dans le document US 2005/011370 A1, relatif à un appareil de cuisson par friture automatique comportant des moyens de battage et des moyens de commande automatiques des cycles de cuisson de l'appareil.

On connaît également d'autres appareils électroménagers de même type adaptés à la réalisation d'autres types de préparation tels que, par exemple, des sauces, des préparations à base de céréales ou de riz ou encore des confitures.

Dans le cas particulier de la préparation de confitures, il est apparu que les appareils selon l'art antérieur n'étaient pas toujours en mesure de prévenir l'apparition d'une importante quantité de mousse ou écume qui nuit à la qualité de la confiture et induit une perte trop importante de matière première.

Ce problème, spécifique à la préparation de confitures, n'a a ce jour pas trouvé de solution dans les appareils électroménagers de préparation de confitures, ni par ailleurs dans les appareils électroménagers dédiés à d'autres préparations culinaires, pas même ceux relatifs à une cuisson par friture comme décrit dans US 2005/011370 A1.

Il est donc apparu le besoin d'un appareil électroménager de préparation culinaire qui soit en mesure d'éviter autant que faire se peut l'apparition de quantités importantes d'écume, notamment lors du travail de préparations épaisses ou visqueuses.

Afin d'atteindre cet objectif, l'invention concerne un appareil électroménager de préparation culinaire comprenant au moins une cuve de cuisson, des moyens de chauffage de la cuve de cuisson comprenant au moins un élément chauffant électrique, des moyens de brassage du contenu de la cuve de cuisson actionnés par au moins un moteur électrique, des moyens de commande et d'alimentation de l'élément chauffant électrique et du moteur électrique qui comprennent des moyens externes de réglage, par un utilisateur, d'une durée choisie, et des moyens de mesure de température raccordés aux moyens de commande. Selon l'invention, l'appareil de préparation culinaire est caractérisé en ce que les moyens de commande sont adaptés pour assurer le fonctionnement de l'élément chauffant électrique et du moteur électrique selon au moins un cycle de cuisson comprenant au moins :
■ une première phase de cuisson pendant laquelle le moteur électrique fonctionne, l'élément chauffant délivre une puissance moyenne au moins égale à 200 W par litre de contenance de la cuve de cuisson, et la température est mesurée pour déterminer, en fonction d'une température de consigne cuisson, la fin de la première phase de cuisson,
■ une deuxième phase de cuisson dont la durée est déterminée en fonction de la durée choisie et pendant laquelle le moteur électrique fonctionne et la puissance moyenne délivrée par l'élément chauffant est inférieure à 200W par litre de contenance de la cuve de cuisson et de préférence inférieure à 160W par litre de contenance de la cuve de cuisson.

Le choix, pour la première phase de cuisson, d'une puissance moyenne supérieure à 200 W par litre de contenance de la cuve de cuisson permet d'obtenir des temps de montée en température satisfaisants. Ainsi, dans le cas d'une cuve de cuisson ayant une contenance de 4 litres, l'élément chauffant aura une puissance moyenne de préférence supérieure à 800 W. Dans le cadre de la présente invention, il faut entendre par contenance de la cuve de cuisson le volume maximal de produits qu'elle est susceptible de contenir et non pas le volume préconisé de remplissage pour une utilisation optimale de l'appareil de préparation culinaire. Selon une caractéristique préférée mais non nécessaire de l'invention, la puissance moyenne délivrée par l'élément chauffant au cours de la première phase de cuisson correspond à la puissance moyenne nominale de l'élément chauffant.

La réduction de puissance, intervenant après avoir atteint une température recherchée, associée au brassage effectué par l'appareil culinaire selon l'invention, permet de maîtriser les risques d'emballement de l'ébullition et donc de réduire l'apparition de mousse. Ainsi, la limitation de la puissance de chauffage mise en oeuvre par l'invention permet de réaliser confitures, gelées, préparations à base de lait avec un remplissage correct de la cuve de cuisson tout en évitant des pertes de préparation dues à un débordement provoqué par un moussage de la préparation.

La puissance moyenne de la deuxième phase de cuisson peut être constante ou au contraire augmentée de façon progressive ou par une succession de paliers, dans la mesure où, en début de la deuxième phase de cuisson, il est obtenu une réduction du taux d'ébullition afin d'éviter un moussage excessif, source de débordement.

Dans une forme préférée de mise en oeuvre de l'invention, la deuxième phase de cuisson aura une durée minimum d'une minute de manière à garantir une évaporation d'une quantité suffisamment importante d'eau avant le passage à la troisième phase de cuisson.

De manière plus particulièrement préférée mais non strictement nécessaire, la puissance moyenne délivrée pendant la deuxième phase de cuisson sera inférieure à 160 W par litre de contenance de la cuve de cuisson tout en étant supérieure ou égale à 50 W par litre de contenance de la cuve de cuisson.

Selon une caractéristique de l'invention, la puissance moyenne délivrée par l'élément chauffant pendant la deuxième phase de cuisson pourra être choisie pour être comprise entre 15% et 75% de la puissance moyenne délivrée au cours de la première phase de cuisson et, de préférence, comprise entre 60 % et 70 % de la puissance moyenne délivrée au cours de la première phase de cuisson.

Selon une caractéristique de l'invention, le cycle de cuisson comprend une troisième phase de cuisson dont la durée est déterminée en fonction de la durée choisie, de manière que la somme de la durée de la deuxième phase de cuisson et de la durée de la troisième phase de cuisson soit sensiblement égale à la durée choisie, et pendant laquelle le moteur électrique fonctionne et la puissance moyenne délivrée par l'élément chauffant est comprise entre 76% et 90% de la puissance moyenne délivrée au cours de la première phase de cuisson et, de préférence, comprise entre 76 % et 85 % de la puissance moyenne délivrée au cours de la première phase de cuisson. Dans le cadre de la réalisation de confitures, la mise en oeuvre de cette troisième phase de cuisson permet de tenir compte de la diminution de la teneur en eau de la préparation intervenue dans les phases de cuisson précédentes pour augmenter la température de cuisson et atteindre des températures favorables à la transformation des sucres contenus dans la préparation. Cette augmentation de température intervient alors que les risques d'apparition de mousse ou écume ont diminués dans la mesure où elle se fait avec une préparation à teneur en eau réduite.

Dans le but d'effectuer une cuisson optimale des sucres, selon une autre caractéristique de l'invention, le cycle de cuisson comprend une quatrième phase de cuisson dont la durée est déterminée en fonction de la durée choisie de manière que la somme des durées de la deuxième, troisième et quatrième phases de cuisson soit sensiblement égale à la durée choisie. Pendant la quatrième phase de cuisson, le moteur électrique fonctionne et l'élément chauffant délivre une puissance moyenne au moins égale à 200 W par litre de contenance de la cuve de cuisson.

Selon l'invention, les phases de cuisson sont susceptibles de présenter différentes durées. Toutefois, dans une variante préférée mais non exclusive de réalisation, les phases de cuisson, faisant suite à la première phase de cuisson, possèdent sensiblement une même durée.

Selon l'invention, la détermination de la fin de la première phase de cuisson peut être réalisée de différentes façons en fonction de la température de consigne cuisson. Une première façon de procéder pour déterminer la fin de la première phase de cuisson consiste à choisir le moment où la température de consigne cuisson est atteinte.

Une deuxième façon de procéder pour déterminer la fin de la première phase de cuisson consiste à commencer le décompte d'une durée prédéterminée lorsque la température de consigne cuisson est atteinte, la fin de la première phase de cuisson correspond alors à la fin du décompte. Cette deuxième façon de procéder permet de tenir compte des éventuelles incertitudes quant à la mesure de la température que l'on cherche à atteindre. En adoptant une température de consigne cuisson inférieure à la température d'ébullition de l'eau et une durée prédéterminée suffisante, on est alors certain de porter la préparation à l'ébullition sans risque d'emballement. Au contraire dans certains cas, la seule détection d'une température de consigne, par exemple à 99° C, pourrait conduire à une surchauffe de la préparation dans le cas où cette dernière atteint son point d'ébullition à une température inférieure, telle que par exemple 96°C ou 97°C, température qu'elle conservera jusqu'à évaporation complète de l'eau qu'elle contient. Dans ce cas, la première phase de cuisson durerait jusqu'à évaporation complète de l'eau avec pour conséquence un emballement de l'ébullition et donc l'apparition de mousse, voire de risques de débordements. Une situation du même ordre peut être rencontrée si le contact entre le capteur de température et la cuve de cuisson n'est pas thermiquement satisfaisant.

Dans le cadre de la deuxième façon de procéder pour déterminer la fin de la première phase de cuisson et selon une caractéristique de l'invention, la durée prédéterminée possède une valeur comprise entre 1 min et 5 min et de préférence comprise entre 2 min et 3 min.

Toujours dans le cadre de la deuxième façon de procéder pour déterminer la fin de la première phase de cuisson et selon une autre caractéristique de l'invention, la température de consigne cuisson est comprise entre 70 °C et 85 °C et de préférence comprise entre 74 °C et 80 °C. Ces plages de température sont particulièrement adaptées lorsqu'il est cherché à assurer la cuisson et la réduction de préparations à forte concentration en eau, car elles permettent, en combinaison avec la durée déterminée, de garantir que la température de vaporisation de l'eau sera atteinte indépendamment des aléas quant à la température exacte d'ébullition de l'eau dans les conditions d'utilisation effective de l'appareil de préparation culinaire selon l'invention.

Afin d'éviter un dysfonctionnement et/ou une cuisson inadaptée en cas d'utilisation d'une préparation ayant été préalablement chauffée, selon une caractéristique de l'appareil conforme à l'invention, le cycle de cuisson est précédé d'une mesure de température de manière à ne démarrer le cycle de cuisson que si la température mesurée est inférieure ou égale à la température de consigne cuisson.

Selon une autre caractéristique de l'invention visant à garantir une homogénéité de la préparation après l'arrêt de l'alimentation de l'élément chauffant, le cycle de cuisson est suivi d'un cycle de brassage pendant lequel l'élément chauffant n'est pas alimenté et le moteur électrique fonctionne. Cette caractéristique permet de renouveler la préparation au contact de la paroi de la cuve de cuisson pendant le refroidissement de l'élément chauffant et donc d'éviter les risques de cuisson excessive qui pourraient intervenir en l'absence de brassage. Le cycle de brassage peut alors posséder une durée comprise entre 30 secondes et 5 minutes choisie en fonction de la puissance et de l'inertie thermique de la cuve de cuisson et de l'élément chauffant.

Selon une autre caractéristique de l'invention permettant à l'appareil de préparation culinaire conforme à l'invention de réaliser d'autres types de recettes ou de préparations, les moyens de commande sont adaptés pour mettre en oeuvre un cycle de préparation comprenant :
■ une première phase de préparation pendant laquelle le moteur électrique fonctionne, l'élément chauffant délivre une puissance moyenne au moins égale à 200 W par litre de contenance de la cuve de cuisson et la température est mesurée pour déterminer en fonction d'une température de consigne préparation la fin de la phase de préparation,
■ une deuxième phase de préparation pendant laquelle l'élément chauffant n'est pas alimenté tandis que le moteur électrique fonctionne et la température est mesurée de manière à arrêter le fonctionnement du moteur électrique lorsque la température mesurée est inférieure ou égale à la température de consigne refroidissement.

Un tel cycle de préparation est particulièrement adapté à la réalisation de sirops de sucre.

Selon l'invention, la détermination de la fin de la première phase de cuisson peut être réalisée de différentes façons en fonction de la température de consigne cuisson. Une première façon de procéder pour déterminer la fin de la première phase de cuisson consiste à choisir le moment où la température de consigne cuisson est atteinte.

Une deuxième façon de procéder pour déterminer la fin de la première phase de cuisson consiste à commencer le décompte d'une durée prédéterminée lorsque la température de consigne cuisson est atteinte, la fin de la première phase de cuisson correspond alors à la fin du décompte. Cette deuxième façon de procéder permet de tenir compte des éventuelles incertitudes quant à la mesure de la température que l'on cherche à atteindre.

Dans le cadre de la deuxième façon de procéder pour déterminer la fin de la première phase de préparation et, selon une caractéristique de l'invention, la durée prédéterminée possède une valeur comprise entre 1 min et 5 min et de préférence comprise entre 2 min et 3 min.

Dans le cadre de la deuxième façon de procéder pour déterminer la fin de la première phase de cuisson et, selon une autre caractéristique de l'invention, la température de consigne préparation est comprise entre 110°C et 130 °C et, de préférence, comprise entre 110 °C et 120 °C. Cette température de consigne préparation prise en combinaison avec les valeurs de la durée prédéterminée ci-dessus est particulièrement adaptée à la préparation d'un sirop de sucre ayant une consistance dite au « boulé ».

Selon une autre caractéristique, la température de consigne refroidissement est comprise entre 100°C et 109°C. Cette caractéristique de l'invention est également adaptée à la préparation d'un sirop au « boulé » en garantissant l'homogénéité de la température du sirop de sucre pendant son refroidissement.

Selon une autre caractéristique de l'invention particulièrement intéressante, lorsque l'appareil électroménager de préparation culinaire est utilisé par exemple pour réaliser de la confiture en préparant tout d'abord un sirop de sucre auquel seront ensuite ajoutés les fruits, les moyens de commande sont adaptés pour faire suivre le cycle de préparation par le cycle de cuisson et pour ne pas commencer le cycle de cuisson si la température mesurée est supérieure ou égale à la température de consigne cuisson.

Selon encore une autre caractéristique de l'invention permettant à l'appareil électroménager de préparation culinaire conforme à l'invention d'être utilisé pour procéder à une extraction à la vapeur de jus de fruits, les moyens de commande sont adaptés pour mettre en oeuvre un cycle d'extraction comprenant :
■ une première phase d'extraction pendant laquelle le moteur électrique est arrêté, l'élément chauffant délivre une puissance moyenne au moins égale à 200 W par litre de contenance de la cuve de cuisson et la température est mesurée pour déterminer en fonction d'une température de consigne extraction la fin de la première phase d'extraction,
■ une deuxième phase d'extraction dont la durée est égale à la durée choisie et pendant laquelle le moteur électrique est arrêté et la puissance moyenne délivrée par l'élément chauffant est inférieure à 200 W par litre de contenance de la cuve de cuisson et de préférence inférieure à 160 W par litre de contenance de la cuve de cuisson.

De manière plus particulièrement préférée mais non strictement nécessaire, la puissance moyenne délivrée pendant la deuxième phase d'extraction sera inférieure à 160 W par litre de contenance de la cuve de cuisson tout en étant supérieure ou égale à 50 W par litre de contenance de la cuve de cuisson.

Selon une caractéristique de l'invention, la puissance moyenne délivrée par l'élément chauffant au cours de la deuxième phase d'extraction est comprise entre 15% et 80% de la puissance moyenne délivrée au cours de la première phase d'extraction et, de préférence, comprise entre 65 % et 75 % de la puissance moyenne délivrée au cours de la première phase d'extraction.

Selon l'invention, la détermination de la fin de la première phase d'extraction peut être réalisée de différentes façons en fonction de la température de consigne extraction. Une première façon de procéder pour déterminer la fin de la première phase de cuisson consiste à choisir le moment où la température de consigne cuisson est atteinte.

Une deuxième façon de procéder pour déterminer la fin de la première phase d'extraction consiste à commencer le décompte d'une durée prédéterminée lorsque la température de consigne extraction est atteinte, la fin de la première phase de cuisson correspond alors à la fin du décompte.

La durée prédéterminée pourra posséder une valeur comprise entre 1 min et 5 min et de préférence comprise entre 2 min et 3 min, tandis que la température de consigne extraction sera, par exemple, choisie pour être comprise entre 70 °C et 85 °C et de préférence comprise entre 74°C et 80°C.

Selon encore une autre caractéristique de l'invention visant à permettre la préparation, par exemple, de confiture faisant intervenir une cuisson préalable des fruits avant l'adjonction de sucres spécifiques, les moyens de commande sont adaptés pour mettre en oeuvre un cycle de précuisson comprenant :
■ une première phase de précuisson pendant laquelle le moteur électrique fonctionne, l'élément chauffant délivre une puissance moyenne au moins égale à 200 W par litre de contenance de la cuve de cuisson et la température est mesurée pour déterminer, en fonction d'une température de consigne précuisson, la fin de la première phase de l'extraction,
■ une deuxième phase de précuisson dont la durée est égale à la durée choisie et pendant laquelle : le moteur électrique fonctionne et l'élément chauffant délivre une puissance moyenne inférieure à 200 W par litre de contenance de la cuve de cuisson et de préférence inférieure à 160 W par litre de contenance de la cuve de cuisson.

De manière plus particulièrement préférée mais non strictement nécessaire, la puissance moyenne délivrée pendant la deuxième phase de précuisson sera inférieure à 160 W par litre de contenance de la cuve de cuisson tout en étant supérieure ou égale à 50 W par litre de contenance de la cuve de cuisson.

Selon l'invention, la détermination de la fin de la première phase de précuisson peut être réalisée de différentes façons en fonction de la température de consigne précuisson. Une première façon de procéder pour déterminer la fin de la première phase de précuisson consiste à choisir le moment où la température de consigne précuisson est atteinte.

Une deuxième façon de procéder pour déterminer la fin de la première phase de précuisson consiste à commencer le décompte d'une durée prédéterminée lorsque la température de consigne précuisson est atteinte, la fin de la première phase précuisson correspond alors à la fin du décompte.

La durée prédéterminée pourra posséder une valeur comprise entre 1 min et 5 min et, de préférence, comprise entre 2 min et 3 min tandis que la température de consigne précuisson sera, par exemple, choisie pour être comprise entre 70 °C et 85 °C et, de préférence, comprise entre 74°C et 80°C.

Selon encore une autre caractéristique de l'invention visant à offrir une grande versatilité à l'appareil de préparation culinaire, ce dernier comprend des moyens de sélection de programmes comprenant chacun un cycle de fonctionnement ou une séquence de cycles de fonctionnement mis en oeuvre par les moyens de commande.

Bien entendu, les différentes caractéristiques de l'invention évoquées ci-dessus peuvent être mises en oeuvre les unes avec les autres selon différentes combinaisons lorsqu'elles ne sont pas incompatibles ou exclusives les unes des autres.

Par ailleurs, diverses autres caractéristiques de l'invention ressortent de la description faite ci-dessous en référence aux dessins annexés qui montrent, à titre d'exemple non limitatif, une forme de réalisation de l'objet de l'invention.

La **figure 1** est une vue éclatée d'un appareil électroménager de préparation culinaire selon l'invention.

La **figure 2** est une vue en coupe verticale de l'appareil électroménager de préparation culinaire selon la figure **1** dans une configuration dite «cuiseur brasseur » dans laquelle il est mis en oeuvre une cuve de cuisson, un outil de travail rotatif et un couvercle.

La **figure 3** est une vue de face de la façade de moyens de commande de l'appareil électroménager de préparation culinaire illustré à la figure **1****.**

La **figure 4** est une vue en coupe verticale de l'appareil de préparation culinaire selon la figure **1** dans une configuration dite « extracteur de jus » dans laquelle il est mis en oeuvre la cuve de cuisson, un récipient intermédiaire perforé et le couvercle.

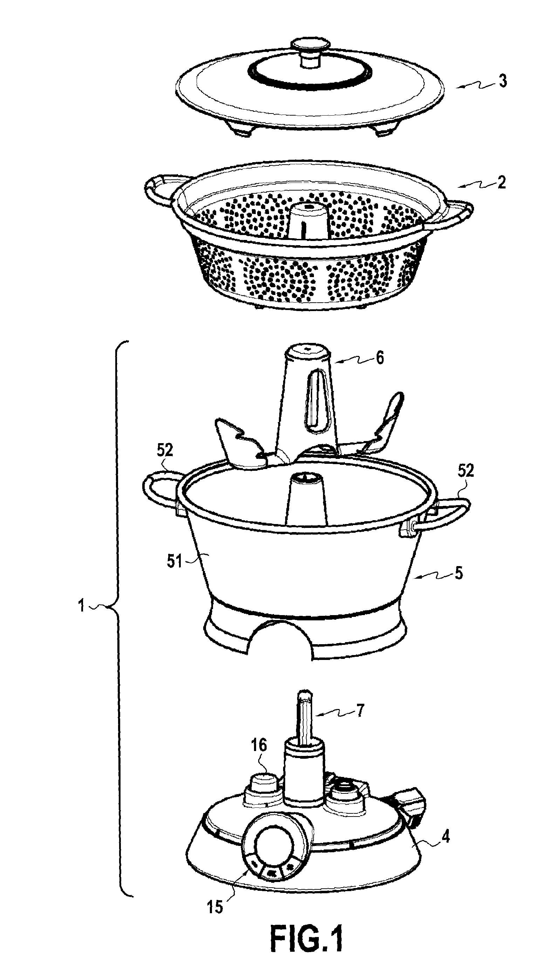

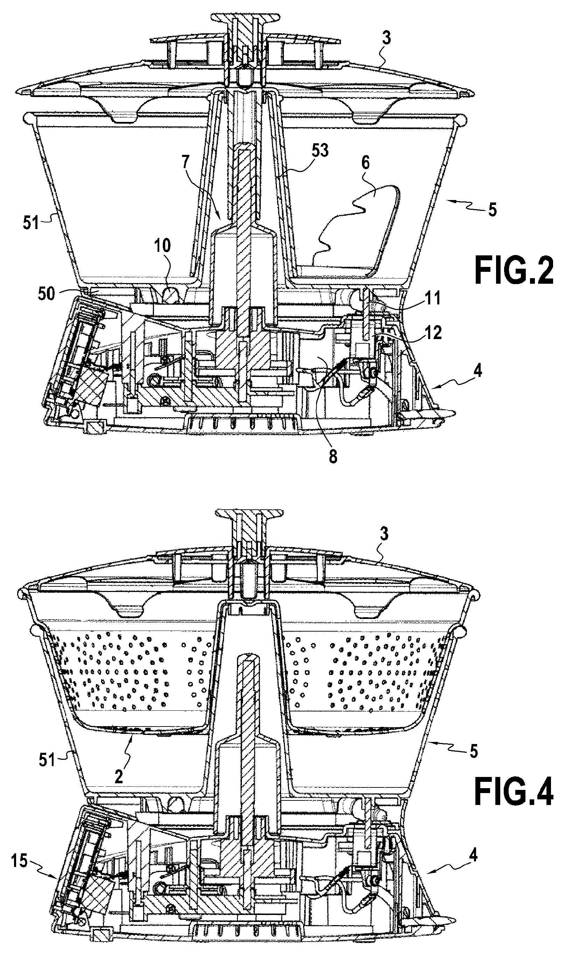

La **figure 1** illustre un exemple de réalisation d'un appareil électroménager de préparation culinaire selon l'invention comprenant une partie inférieure **1,** un récipient intermédiaire perforé **2,** et un couvercle **3.** La partie inférieure **1** comprend un socle **4** sur lequel est adaptée une cuve de cuisson **5** amovible. Afin de permettre, dans certaines configurations d'utilisation, un brassage du contenu de la cuve de cuisson **5,** l'appareil comprend en tant que moyens de brassage un outil de travail rotatif **6** amovible associé à un dispositif d'entraînement **7** comprenant un moteur électrique **8** logé dans le socle **4,** comme le montre la **figure 2****.**

La cuve de cuisson **5** présente un fond **50** et une paroi latérale **51** qui est, de préférence, tronconique et pourvue d'organes de préhension **52.** La cuve de cuisson **5** possède également une cheminée centrale **53** s'élevant à partir du fond **50** et présentant une forme tronconique. La cuve de cuisson **5** est associée à des moyens de chauffage **10** qui, selon l'exemple illustré, comprennent un élément chauffant électrique blindé disposé sous le fond **50** de la cuve de cuisson **5** et solidaire de cette dernière. L'élément chauffant électrique **10** comporte alors des connecteurs **11** coopérant avec des douilles d'alimentation électrique **12** agencées dans le socle **4.** Pour garantir une bonne diffusion de la chaleur dans le contenu de la cuve de cuisson **5,** cette dernière sera de préférence réalisée en aluminium moulé et présentera alors, de préférence, une épaisseur supérieure à 2 mm.

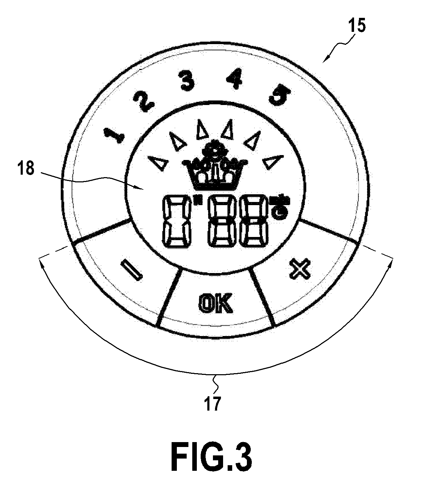

Afin d'assurer le pilotage de l'élément chauffant électrique **10** et du moteur électrique **8,** l'appareil électroménager comprend des moyens de commande **15** adaptés sur le socle **4.** Les moyens de commande **15** sont raccordés à l'élément chauffant électrique **10** et au moteur électrique, ainsi qu'à des moyens de mesure de température **16** solidaires du bloc socle **4.** Les moyens de commande **15** comprennent, comme cela ressort plus particulièrement de la figure **3****,** des moyens externes de réglage **17** permettant à un utilisateur de choisir une durée de fonctionnement ainsi que des programmes de fonctionnement comme cela apparaîtra par la suite. Les moyens de réglage **17** comprennent selon l'exemple illustré trois touches portant respectivement les signes « - », « OK » et « + ». Les moyens de commande **15** comprennent, en outre, des moyens d'affichage digitaux et analogiques **18.**

L'appareil de préparation culinaire, ainsi constitué, est susceptible d'être mis en oeuvre selon deux configurations d'utilisation dites respectivement configuration cuiseur brasseur, illustrée à la figure **2****,** et configuration extracteur de jus, illustrée à la figure **4****.**

En configuration cuiseur brasseur, l'outil de travail rotatif **6** est disposé à l'intérieur de la cuve de cuisson **5** en étant engagé sur le dispositif d'entraînement **7** et le couvercle **3** est susceptible d'être placé sur la cuve de cuisson **5** tandis que le récipient intermédiaire **2** n'est pas utilisé.

En configuration extracteur de jus, l'outil de travail rotatif **6** n'est pas utilisé et le récipient intermédiaire **2** est adapté sur la cuve de cuisson de manière à laisser subsister entre le fond du récipient intermédiaire et le fond **50** de la cuve de cuisson **5** un espace de réception d'eau. Les perforations du récipient intermédiaire **2** permettent, d'une part, à la vapeur qui sera produite de diffuser à l'intérieur du récipient intermédiaire **2** et, d'autre part, l'écoulement dans la cuve de cuisson **5** du jus produit dans le récipient intermédiaire **2.** Les perforations du récipient intermédiaire **2** confèrent donc à ce dernier une fonction de panier diffusant.

Selon l'exemple illustré, les moyens de commande **15** permettent à un utilisateur de l'appareil électroménager de choisir parmi cinq programmes de fonctionnement correspondants à la mise en oeuvre d'un cycle de fonctionnement ou d'une séquence de cycle de fonctionnement.

Le premier programme identifié par le chiffre 1 en façade des moyens de commande **15** correspond à un cycle d'extraction permettant d'assurer une extraction à la vapeur du jus de fruits. Pour la mise en oeuvre de ce programme, l'utilisateur place l'appareil électroménager dans sa configuration extracteur de jus illustré à la figure **4** en ayant préalablement rempli d'eau la cuve de cuisson **5** et, de fruits, le panier ou récipient intermédiaire **2.** L'utilisateur sélectionne le programme 1 et règle, ensuite, une durée de fonctionnement dite « durée choisie » au moyen des touches « + » et « - » des moyens de réglage **17.** Une fois la durée choisie affichée sur les moyens **18,** l'utilisateur appuie sur la touche « OK ». Les moyens de commande **15** exécutent alors un cycle d'extraction qui comprend tout d'abord une première phase d'extraction pendant laquelle, le moteur électrique **8** est arrêté tandis que l'élément chauffant **10** délivre une puissance moyenne au moins égale à 200 W par litre de contenance de la cuve de cuisson et dans le cas présent une puissance moyenne de 900 W correspondant à sa puissance nominale. Au cours de cette première phase d'extraction, la température est mesurée par les moyens **16** de manière à pouvoir déterminer la fin de la première phase d'extraction. Selon l'exemple illustré, lorsque la température mesurée atteint une température de consigne extraction comprise entre 70 °C et 85 °C et, de préférence, comprise entre 74 °C et 80 °C, les moyens de commande **15** entament le décompte d'une durée prédéterminée comprise entre une minute et cinq minutes et, de préférence, comprise entre deux minutes et trois minutes. Il est à noter que la température de consigne extraction sera, de préférence, choisie pour correspondre à une température de la préparation dans la cuve de cuisson inférieure à 95 °C. Au terme de ce décompte, la première phase d'extraction est finie et les moyens de commande **15** passent automatiquement à une deuxième phase d'extraction pendant laquelle le moteur électrique **8** est toujours arrêté tandis que l'élément chauffant **10** délivre une puissance moyenne inférieure à 200 W par litre de contenance de la cuve de cuisson **5** et de préférence inférieure à 160 W par litre de contenance de la cuve de cuisson **5.** De manière plus particulièrement préférée, la puissance délivrée par l'élément chauffant **10** pendant la deuxième phase d'extraction sera comprise entre 15 % et 80 % de la puissance moyenne délivrée pendant la première phase d'extraction et, de préférence, comprise entre 65 % et 75 % de la puissance moyenne délivrée pendant la première phase d'extraction. Cette réduction de puissance permet, après avoir atteint le point d'ébullition de l'eau pendant la première phase d'extraction, d'entretenir l'ébullition à un niveau raisonnable afin d'éviter une surproduction de vapeur qui entraînerait un épuisement de la réserve d'eau avant extraction complète du jus des fruits. La réduction de puissance permet également d'éviter une évaporation trop importante des jus recueillis dans la cuve de cuisson pendant la deuxième phase d'extraction. La deuxième phase d'extraction se déroulera pendant un temps correspondant à la durée choisie. À la fin de la deuxième phase d'extraction, les moyens de commande **15** pourront éventuellement émettre un signal sonore et/ou lumineux.

Le deuxième programme identifié par le chiffre 2 en façade des moyens de commande **15** correspond à un programme de préparation de confiture selon un mode allégé qui consiste à tout d'abord préparer un sirop de sucre au « boulé » pour ensuite ajouter au sirop les fruits et procéder à la cuisson de l'ensemble. Ainsi, le deuxième programme correspond à une séquence de fonctionnement comprenant un cycle de préparation suivi d'un cycle de cuisson.

Pour mettre en oeuvre ce deuxième programme, l'utilisateur place l'appareil de préparation culinaire selon l'invention dans sa configuration cuiseur brasseur telle qu'illustrée à la **figure 2****.** Après avoir placé l'eau et le sucre dans la cuve de cuisson **5,** l'utilisateur appuie sur la touche « OK » et les moyens de commande **15** démarrent alors le cycle de préparation qui comprend tout d'abord une première phase de préparation pendant laquelle le moteur électrique fonctionne et l'élément chauffant délivre une puissance moyenne au moins égale à 200 W par litre de contenance de la cuve de cuisson. Pendant cette première phase de préparation, la température est mesurée. Lorsque la température atteint une température de consigne préparation comprise entre 110°C et 130 °C et, de préférence, comprise entre 110°C et 120 °C, les moyens de commande **15** passent automatiquement à une deuxième phase de préparation au cours de laquelle l'élément chauffant est arrêté tandis que le moteur électrique fonctionne encore. Il est à noter que la température de consigne préparation sera de préférence choisie pour correspondre à une température, de la préparation à l'intérieur de la cuve de cuisson **5,** comprise entre 120 °C et 130 °C. Pendant la deuxième phase de préparation, la température est mesurée de manière à arrêter le fonctionnement du moteur électrique **8** lorsque la température mesurée est inférieure ou égale à une température de consigne refroidissement comprise entre 100 °C et 109 °C. Cette température de consigne de refroidissement est choisie pour correspondre à une température de la préparation dans la cuve de cuisson inférieure à 118°C. Le moment où cette température de consigne refroidissement est atteinte correspond à la fin de la deuxième phase de préparation et les moyens de commande **15** émettent alors un signal sonore et/ou lumineux indiquant à l'utilisateur qu'il peut ajouter les fruits au sirop de sucre qui vient d'être préparé. L'utilisateur règle, ensuite, une durée de fonctionnement dite « durée choisie » au moyen des touches « + » et « - » des moyens de réglage **16.** Une fois la durée choisie affichée sur les moyens **18,** l'utilisateur appuie sur la touche « OK », ce qui indique aux moyens de commande **15** de commencer le cycle de cuisson.

Toutefois, afin d'éviter un dysfonctionnement de l'appareil ou une cuisson ne correspondant pas à celle choisie par l'utilisateur, les moyens de commande **15** mesurent la température de manière à ne démarrer le cycle de cuisson que si la température est inférieure à une température de consigne cuisson comprise entre 70 °C et 85 °C et, de préférence comprise entre 74 °C et 80 °C. La température de consigne de cuisson est choisie pour correspondre à une température de la préparation, dans la cuve de cuisson **5,** inférieure à 80 °C.

Si la température mesurée est effectivement inférieure à la température de consigne cuisson, les moyens de commande **15** démarrent le cycle de cuisson qui commence par une première phase de cuisson pendant laquelle le moteur électrique **8** fonctionne et l'élément chauffant **10** délivre une puissance moyenne supérieure à 200 W par litre de contenance de la cuve de cuisson **5.** Au cours de cette première phase de cuisson, la température est mesurée par les moyens **16** de manière à pouvoir déterminer la fin de la première phase de cuisson. Selon l'exemple illustré, lorsque la température mesurée atteint la température de consigne cuisson, les moyens de commande **15** entament le décompte d'une durée prédéterminée comprise entre une minute et cinq minutes et, de préférence, comprise entre deux minutes et trois minutes. Au terme de ce décompte, la première phase de cuisson est finie et les moyens de commande **15** passent automatiquement à une deuxième phase d'extraction pendant laquelle le moteur électrique **8** fonctionne et l'élément chauffant **10** délivre une puissance moyenne inférieure à 200 W par litre de contenance de la cuve de cuisson **5,** et, de préférence, inférieure à 160 W par litre de contenance de la cuve de cuisson **5.** La puissance moyenne délivrée par l'élément chauffant sera alors de préférence supérieure 50 W par litre de contenance de la cuve de cuisson **5.** De manière plus particulièrement préférée, la puissance moyenne délivrée par l'élément chauffant **10** au cours de la deuxième phase de cuisson est choisie pour être comprise entre 15 % et 75 % de la puissance moyenne délivrée au cours de la première phase de cuisson et, de préférence, comprise entre 60 % et 70 % de sa puissance moyenne délivrée au cours de la première phase de cuisson. La deuxième phase de cuisson se déroule pendant un temps correspondant au tiers de la durée choisie pour être suivie d'une troisième phase de cuisson pendant laquelle le moteur électrique **8** fonctionne et l'élément chauffant **10** délivre une puissance moyenne supérieure à la puissance moyenne délivrée au cours de la deuxième phase et comprise entre 76 % et 90 % de la puissance moyenne délivrée au cours de la première phase de cuisson et, de préférence, comprise entre 76 % et 85 % de sa puissance moyenne au cours de la première phase de cuisson. La troisième phase de cuisson se déroule également pendant un temps correspondant au tiers de la durée choisie. À l'issue de la troisième phase de cuisson, les moyens de commande **15** enchaînent avec une quatrième phase de cuisson pendant laquelle le moteur électrique fonctionne et l'élément chauffant délivre une puissance moyenne au moins égale à 200 W par litre de contenance de la cuve de cuisson. La quatrième phase de cuisson présente également une durée égale au tiers de la durée choisie, de sorte que la durée cumulée des deuxième à quatrième phases de cuisson correspond à la durée choisie.

Selon une variante de réalisation de l'invention, le cycle de cuisson est suivi d'un cycle de brassage pendant lequel l'élément chauffant n'est pas alimenté et le moteur électrique fonctionne. Ce cycle de brassage peut, par exemple, posséder une durée comprise entre 30 secondes et cinq minutes. Au terme du cycle de brassage ou, s'il n'y a pas eu de cycle de brassage, du cycle de cuisson, l'unité de commande **15** peut émettre un signal sonore et/ou lumineux.

Le troisième programme identifié par le chiffre 3 sur la façade des moyens de commande **15** correspond à un mode traditionnel de préparation de confiture mettant en oeuvre uniquement le cycle de cuisson à quatre phases de cuisson précédemment décrit, éventuellement suivi du cycle de brassage. Pour le troisième programme, l'appareil de préparation culinaire est utilisé dans sa configuration cuiseur brasseur.

Le quatrième programme identifié par le chiffre **4** sur la façade des moyens de commande correspond à un mode de préparation de confiture au moyen d'un sucre complété par un gélifiant appelé sucre spécial confiture. Le quatrième programme correspond à une séquence de fonctionnement comprenant un cycle de précuisson suivi d'un cycle de cuisson à deux phases de cuisson. Pour ce quatrième programme, l'appareil de préparation culinaire est également utilisé dans sa configuration cuiseur brasseur.

Avant de lancer le quatrième programme, l'utilisateur place les fruits dans la cuve de cuisson **5.** Ensuite, il choisit un temps de fonctionnement et appuie sur la touche « OK » ce qui conduit les moyens de commande **15** à démarrer le cycle de précuisson qui commence par une première phase de précuisson. Pendant la première phase de précuisson, le moteur électrique **8** fonctionne, ainsi que l'élément chauffant **10** qui délivre une puissance moyenne au moins égale à 200 W par litre de contenance de la cuve de cuisson. Au cours de cette première phase de précuisson, la température est mesurée par les moyens **16** de manière à pouvoir déterminer la fin de la première phase de précuisson. Selon l'exemple illustré, lorsque la température mesurée atteint une température de consigne précuisson comprise entre 70 °C et 85 °C et, de préférence, comprise entre 74 °C et 80 °C, les moyens de commande **15** entament le décompte d'une durée prédéterminée comprise entre une minute et cinq minutes et, de préférence, comprise entre deux minutes et trois minutes. La température de consigne précuisson est, de préférence, choisie pour correspondre à une température de la préparation dans la cuve de cuisson **5** qui est inférieure à 95 °C. Au terme de ce décompte, la première phase précuisson s'achève et les moyens de commande **15** passent automatiquement à une deuxième phase précuisson d'une durée égale à la durée choisie et pendant laquelle le moteur électrique fonctionne tandis que l'élément chauffant **10** délivre une puissance moyenne inférieure à 200 W par litre de contenance de la cuve de cuisson **5,** et, de préférence, inférieure à 160 W par litre de contenance de la cuve de cuisson **5** tout en étant, de manière plus particulièrement préférée, supérieure 50 W par litre de contenance de la cuve de cuisson **5.** Au terme de la deuxième phase de précuisson, l'alimentation du moteur **8** et de l'élément chauffant **10** est interrompue et les moyens de commande **15** émettent un signal sonore et/ou lumineux qui indique à l'utilisateur qu'il peut ajouter le sucre spécial. L'utilisateur choisit à nouveau une durée de fonctionnement qu'il valide en appuyant sur la touche « OK », ce qui donne l'ordre aux moyens de commande **15** d'entamer le cycle de cuisson.

Comme cela est expliqué précédemment, afin d'éviter un dysfonctionnement de l'appareil ou une cuisson ne correspondant pas à celle choisie par l'utilisateur, les moyens de commande **15** mesurent alors la température de manière à ne démarrer le cycle de cuisson que si la température est inférieure à une température de consigne cuisson comprise entre 70 °C et 85 °C et, de préférence, comprise entre 74 °C et 80 °C. La température de consigne cuisson est choisie pour correspondre à une température de la préparation dans la cuve de cuisson **5** inférieure à 80 °C.

Si la température mesurée est effectivement inférieure à la température de consigne cuisson, les moyens de commande **15** démarrent le cycle de cuisson qui commence par une première phase de cuisson pendant laquelle le moteur électrique **8** fonctionne et l'élément chauffant **10** délivre une puissance moyenne supérieure à 200 W par litre de contenance de la cuve de cuisson **5.** Au cours de cette première phase de cuisson, la température est mesurée par les moyens **16** de manière à pouvoir déterminer la fin de la première phase de cuisson. Selon l'exemple illustré, lorsque la température mesurée atteint la température de consigne cuisson, les moyens de commande 15 entament le décompte d'une durée prédéterminée comprise entre une minute et cinq minutes et, de préférence, comprise entre deux minutes et trois minutes. Au terme de ce décompte, la première phase de cuisson est finie et les moyens de commande 15 passent automatiquement à une deuxième phase de cuisson pendant laquelle le moteur électrique fonctionne et l'élément chauffant **10** délivre une puissance moyenne inférieure à 200 W par litre de contenance de la cuve de cuisson et de préférence inférieure à 160 W par litre de contenance de la cuve de cuisson tout en étant, de manière plus particulièrement préférée, supérieure 50 W par litre de contenance de la cuve de cuisson **5.** De manière préférée, la puissance moyenne délivrée par l'élément chauffant **10** au cours de la deuxième phase de cuisson sera choisie pour être comprise entre 15 % et 75 % de la puissance moyenne délivrée au cours de la première phase de cuisson et, de préférence, comprise entre 60 % et 70 % de sa puissance moyenne délivrée au cours de la première phase de cuisson. La deuxième phase de cuisson se déroule pendant un temps correspondant à la durée choisie. Au terme de ce temps de fonctionnement, le cycle de cuisson est terminé et les moyens de commande **15** peuvent, avant de déclencher un signal avertisseur, engager, pour une durée comprise entre 30 secondes et cinq minutes, un cycle de brassage pendant lequel seul le moteur électrique **8** fonctionne.

Le cinquième programme, mis en oeuvre avec l'appareil de préparation culinaire en configuration brasseur cuiseur, est plus particulièrement adapté à l'exécution de préparations à base de lait et de céréales, comme par exemple la préparation appelée « Koutia », ou encore le riz au lait ou la semoule au lait. Le cinquième programme met uniquement en oeuvre le cycle de cuisson à deux phases de cuisson au cours desquelles la température de consigne cuisson utilisée correspond à une température de consigne plus adaptée aux préparations à base de lait. La température de consigne cuisson est alors choisie de manière que lorsque la température de consigne est atteinte la température de la préparation à l'intérieur de la cuve de cuisson **5** soit inférieure à 85 °C. Comme expliqué précédemment, la durée de la deuxième phase de cuisson correspondant à la durée choisie, par un réglage de l'utilisateur, pour la cuisson de la préparation. De plus pendant la deuxième phase de cuisson l'élément chauffant délivre une puissance moyenne inférieure à 200 W par litre de contenance de la cuve de cuisson et, de préférence, inférieure à 160 W par litre de contenance de la cuve de cuisson tout en étant, de manière plus particulièrement préférée, supérieure 50 W par litre de contenance de la cuve de cuisson **5.**

Il apparaît donc que la possibilité, offerte à l'utilisateur, d'un choix parmi au moins cinq programmes permet avec un même appareil culinaire selon l'invention de réaliser facilement différents types de préparation.

Selon l'invention, la modulation de la puissance de l'élément chauffant électrique **10** peut être réalisée de toute façon appropriée. Selon l'exemple illustré, et afin de réduire les coûts impliqués par cette régulation, il est mis en oeuvre un hachage ou découpage de l'alimentation de l'élément chauffant électrique **10.** Afin de tenir compte de ce hachage, au sens de l'invention, la puissance moyenne de l'élément chauffant au cours d'une phase de fonctionnement correspond à la puissance moyenne calculée sur la durée totale de cette phase de fonctionnement ou sur une période complète de hachage de cette phase de fonctionnement, une période complète de hachage étant constituée d'un temps de chauffe ou marche et d'un temps d'extinction.

La présente invention n'est nullement limitée aux exemples de réalisation décrits précédemment mais englobe de nombreuses modifications dans le cadre des revendications.

Ainsi, il peut être envisagé de faire commencer l'une ou l'autre des phases des cycles de cuisson, de précuisson, d'extraction ou de préparation et, plus particulièrement, les deuxièmes phases de ces cycles, par une temporisation à puissance de chauffage nulle. La temporisation pourra, par exemple, avoir une durée comprise entre 10 secondes et 60 secondes de manière à éviter un emballement de l'ébullition lors de la reprise du chauffage.

## Revendications

1. Appareil électroménager de préparation culinaire comprenant au moins une cuve de cuisson **(5),** des moyens de chauffage de la cuve de cuisson comprenant au moins un élément chauffant électrique **(10),** des moyens **(6,7,8)** de brassage du contenu de la cuve de cuisson actionnés par au moins un moteur électrique **(8),** des moyens **(15)** de commande et d'alimentation de l'élément chauffant électrique **(10)** et du moteur électrique **(8)** qui comprennent des moyens externes **(17)** de réglage, par un utilisateur, d'une durée choisie, et des moyens **(16)** de mesure de température raccordés aux moyens de commande **(15), caractérisé en ce que** les moyens de commande **(15)** sont adaptés pour assurer le fonctionnement de l'élément chauffant électrique **(10)** et du moteur électrique **(8)** selon au moins un cycle de cuisson comprenant au moins :
■ une première phase de cuisson pendant laquelle le moteur électrique **(8)** fonctionne, l'élément chauffant **(10)** délivre une puissance moyenne au moins égale à 200 W par litre de contenance de la cuve de cuisson, et la température est mesurée pour déterminer, en fonction d'une température de consigne cuisson, la fin de la première phase de cuisson,
■ une deuxième phase de cuisson dont la durée est déterminée en fonction de la durée choisie et pendant laquelle le moteur électrique **(8)** fonctionne et la puissance moyenne délivrée par l'élément chauffant **(10)** est inférieure à 200W par litre de contenance de la cuve de cuisson et de préférence inférieure à 160W par litre de contenance de la cuve de cuisson.

2. Appareil électroménager de préparation culinaire selon la revendication 1, **caractérisé en ce que** la deuxième phase de cuisson possède une durée supérieure ou égale à une minute.

3. Appareil électroménager de préparation culinaire selon la revendication 1 ou 2, **caractérisé en ce que** la puissance moyenne délivrée au cours de la deuxième phase de cuisson est comprise entre 15% et 75% de la puissance moyenne délivrée au cours de la première phase de cuisson et, de préférence, comprise entre 60 % et 70 % de la puissance moyenne délivrée au cours de la première phase de cuisson.

4. Appareil électroménager de préparation culinaire selon l'une des revendications 1 à 3, **caractérisé en ce que** le cycle de cuisson comprend une troisième phase de cuisson dont la durée est déterminée en fonction de la durée choisie, de manière que la somme de la durée de la deuxième phase de cuisson et de la durée de la troisième phase de cuisson soit sensiblement égale à la durée choisie, et pendant laquelle le moteur électrique **(8)** fonctionne et la puissance moyenne délivrée par l'élément chauffant (**10**) est comprise entre 50% et 90% de la puissance moyenne délivrée au cours de la première phase de cuisson et, de préférence, comprise entre 76 % et 85 % de la puissance moyenne délivrée au cours de la première phase de cuisson.

5. Appareil électroménager de préparation culinaire selon la revendication 3 ou 4, **caractérisé en ce que** le cycle de cuisson comprend une quatrième phase de cuisson dont la durée est déterminée en fonction de la durée choisie, de manière que la somme des durées de la deuxième, troisième et quatrième phases de cuisson soit sensiblement égale à la durée choisie, et pendant laquelle le moteur électrique fonctionne (8) et l'élément chauffant (**10**) délivre une puissance moyenne au moins égale à 200 W par litre de contenance de la cuve de cuisson.

6. Appareil électroménager de préparation culinaire selon la revendication 2 ou 3, **caractérisé en ce que** les phases de cuisson, faisant suite à la première phase de cuisson, possèdent sensiblement une même durée.

7. Appareil électroménager de préparation culinaire selon l'une des revendications 1 à 6, **caractérisé en ce que** la fin de la première phase de cuisson correspond sensiblement au moment où la température de consigne cuisson est atteinte.

8. Appareil électroménager de préparation culinaire selon l'une des revendications 1 à 6, **caractérisé en ce que** la fin de la première phase de cuisson correspond à la fin d'un décompte d'une durée prédéterminée, le décompte étant commencé lorsque la température de consigne cuisson est atteinte.

9. Appareil électroménager de préparation culinaire selon la revendication 8, **caractérisé en ce que** la durée prédéterminée possède une valeur comprise entre 1 min et 5 min et, de préférence, comprise entre 2 min et 3 min.

10. Appareil électroménager de préparation culinaire selon la revendication 8 ou 9, **caractérisé en ce que** la température de consigne cuisson est comprise entre 70 °C et 85 °C et, de préférence, comprise entre 74 °C et 80 °C.

11. Appareil électroménager de préparation culinaire selon l'une des revendications 8 à 10, **caractérisé en ce que** le cycle de cuisson est précédé d'une mesure de température de manière à ne démarrer le cycle de cuisson que si la température mesurée est inférieure ou égale à la température de consigne cuisson.

12. Appareil électroménager de préparation culinaire selon l'une des revendications 1 à 11, **caractérisé en ce que** le cycle de cuisson est suivi d'un cycle de brassage pendant lequel l'élément chauffant **(10)** n'est pas alimenté et le moteur électrique **(8)** fonctionne.

13. Appareil électroménager de préparation culinaire selon la revendication 12, **caractérisé en ce que** le cycle de brassage possède une durée comprise entre 30 secondes et 5 minutes.

14. Appareil électroménager de préparation culinaire selon l'une des revendications 1 à 13, **caractérisé en ce que** les moyens de commande (15) sont adaptés pour mettre en oeuvre un cycle de préparation comprenant :
■ une première phase de préparation pendant laquelle le moteur électrique **(8)** fonctionne, l'élément chauffant (**10**) délivre une puissance moyenne au moins égale à 200 W par litre de contenance de la cuve de cuisson et la température est mesurée pour déterminer en fonction d'une température de consigne préparation la fin de la phase de préparation,
■ une deuxième phase de préparation pendant laquelle l'élément chauffant **(10)** n'est pas alimenté, tandis que le moteur électrique **(8)** fonctionne et la température est mesurée de manière à arrêter le fonctionnement du moteur électrique **(8)** lorsque la température mesurée est inférieure ou égale à la température de consigne refroidissement.

15. Appareil électroménager de préparation culinaire selon la revendication 14, **caractérisé en ce que** la fin de la première phase de préparation correspond sensiblement au moment où la température de consigne préparation est atteinte.

16. Appareil électroménager de préparation culinaire selon la revendication 14, **caractérisé en ce que** la fin de la première phase de préparation correspond à la fin d'un décompte d'une durée prédéterminée, le décompte étant commencé lorsque la température de consigne préparation est atteinte.

17. Appareil électroménager de préparation culinaire selon la revendication 16, **caractérisé en ce que** la durée prédéterminée possède une valeur comprise entre 1 min et 5 min et, de préférence, comprise entre 2 min et 3 min.

18. Appareil électroménager de préparation culinaire selon l'une des revendications 14 à 17, **caractérisé en ce que** la température de consigne préparation est comprise entre 110°C et 130 °C et, de préférence, comprise entre 110 °C et 120°C.

19. Appareil électroménager de préparation culinaire selon l'une des revendications 14 à 18, **caractérisé en ce que** la température de consigne refroidissement est comprise entre 100°C et 109°C.

20. Appareil électroménager de préparation culinaire selon l'une des revendications 14 à 19, **caractérisé en ce que** les moyens de commande **(15)** sont adaptés pour faire suivre le cycle de préparation par le cycle de cuisson et pour ne pas commencer le cycle de cuisson tant que la température mesurée est supérieure ou égale à la température de consigne cuisson.

21. Appareil électroménager de préparation culinaire selon l'une des revendications 1 à 20, **caractérisé en ce que** les moyens de commande **(15)** sont adaptés pour mettre en oeuvre un cycle d'extraction comprenant :
■ une première phase d'extraction pendant laquelle le moteur électrique **(8)** est arrêté, l'élément chauffant **(10)** délivre une puissance moyenne au moins égale à 200 W par litre de contenance de la cuve de cuisson et la température est mesurée pour déterminer en fonction d'une température de consigne extraction la fin de la première phase d'extraction,
■ une deuxième phase d'extraction dont la durée est égale à la durée choisie et pendant laquelle : le moteur électrique **(8)** est arrêté et la puissance moyenne délivrée par l'élément chauffant **(10)** est inférieure à 200 W par litre de contenance de la cuve de cuisson **(5)** et, de préférence, inférieure à 160 W par litre de contenance de la cuve de cuisson.

22. Appareil électroménager de préparation culinaire selon la revendication 21 **caractérisée en ce que** la puissance délivrée par l'élément chauffant au cours de la deuxième phase d'extraction est comprise entre 15% et 80% de la puissance moyenne délivrée au cours de la première phase d'extraction et, de préférence, comprise entre 65 % et 75 % de la puissance moyenne délivrée au cours de la première phase d'extraction.

23. Appareil électroménager de préparation culinaire selon la revendication 21 ou 22 **caractérisé en ce que** la fin de la première phase d'extraction correspond sensiblement au moment où la température de consigne extraction est atteinte.

24. Appareil électroménager de préparation culinaire selon la revendication 21 ou 22, **caractérisé en ce que** la fin de la première phase d'extraction correspond à la fin d'un décompte d'une durée prédéterminée, le décompte étant commencé lorsque la température de consigne extraction est atteinte.

25. Appareil électroménager de préparation culinaire selon la revendication 24, **caractérisé en ce que** la durée prédéterminée possède une valeur comprise entre 1 min et 5 min et, de préférence, comprise entre 2 min et 3 min.

26. Appareil électroménager de préparation culinaire selon la revendication 24 ou 25, **caractérisé en ce que** la température de consigne extraction est comprise entre 70 °C et 85 °C et, de préférence, comprise entre 74 °C et 80 °C.

27. Appareil électroménager de préparation culinaire selon l'une des revendications 1 à 26, **caractérisé en ce que** les moyens de commande (15) sont adaptés pour mettre en oeuvre un cycle de précuisson comprenant :
■ une première phase de précuisson pendant laquelle le moteur électrique **(8)** fonctionne, l'élément chauffant **(10)** délivre une puissance moyenne au moins égale à 200 W par litre de contenance de la cuve de cuisson et la température est mesurée pour déterminer, en fonction d'une température de consigne précuisson, la fin de la première phase de précuisson,
■ une deuxième phase de précuisson dont la durée est égale à la durée choisie et pendant laquelle le moteur électrique fonctionne **(8)** et la puissance moyenne délivrée par l'élément chauffant **(10)** est inférieure à 200 W par litre de contenance de la cuve de cuisson et de préférence inférieure à 160 W par litre de contenance de la cuve de cuisson.

28. Appareil électroménager de préparation culinaire selon la revendication 27 **caractérisé en ce que** la fin de la première phase de précuisson correspond sensiblement au moment où la température de consigne précuisson est atteinte.

29. Appareil électroménager de préparation culinaire selon l'une des revendications 27, **caractérisé en ce que** la fin de la première phase de précuisson correspond à la fin d'un décompte d'une durée prédéterminée, le décompte étant commencé lorsque la température de consigne précuisson est atteinte.

30. Appareil électroménager de préparation culinaire selon la revendication 29, **caractérisé en ce que** la durée prédéterminée possède une valeur comprise entre 1 min et 5 min et, de préférence, comprise entre 2 min et 3 min.

31. Appareil électroménager de préparation culinaire selon la revendication 29 ou 30, **caractérisé en ce que** la température de consigne précuisson est comprise entre 70 °C et 85 °C et, de préférence, comprise entre 74 °C et 80 °C.

32. Appareil électroménager de préparation culinaire selon l'une des revendications 12 à 28, **caractérisé en ce qu'**il comprend des moyens (17) de sélection de programmes correspondant chacun à un cycle de fonctionnement ou une séquence de cycles de fonctionnement mis en oeuvre par les moyens de commande (**15**).
